# FASCICULE DE BREVET EUROPEEN

(11) **EP 1 481 558 B1**
(45) Date de publication et mention de la délivrance du brevet: **29.10.2008**
(21) Numéro de dépôt: 03718892.7
(22) Date de dépôt: 18.02.2003
(51) Int. Cl.: H04N 9/12

(54) **PROCEDE ET SYSTEME D'UNIFORMISATION DU RENDU CALORIMETRIQUE D'UNE JUXTAPOSITION DE SURFACES D'AFFICHAGE**
VORRICHTUNG UND VERFAHREN ZUR VEREINHEITLICHUNG DER FARBWIEDERGABE EINER NEBENEINANDERSTELLUNG VON ANZEIGENFLÄCHEN
METHOD AND SYSTEM FOR SYNCHRONIZING COLORIMETRIC RENDERING OF A JUXTAPOSITION OF DISPLAY SURFACES

(30) Priorité: 07.03.2002 FR 0202911
(43) Date de publication de la demande: 01.12.2004
(73) Titulaire: FRANCE TELECOM, 75015 Paris (FR)
(72) Inventeur: HOUMEAU, François, F-92130 ISSY LES MOULINEAUX (FR); GACHIGNARD, Olivier, F-92120 Montrouge (FR); LEYRELOUP, Alain, F-92134 Issy les Moulineaux Cedex (FR)
(74) Mandataire: Desormiere, Pierre-Louis
(86) Numéro de dépôt international: PCT/FR2003/000525
(87) Numéro de publication internationale: WO 2003/075581

(56) Documents cités:
- EP-A- 0 989 757
- WO-A-00/07376
- WO-A-00/18139
- WO-A-02/07431
- GB-A- 2 327 169
- US-A- 6 020 868
- US-A- 6 043 797
- US-B1- 6 219 011

## Description

La présente invention concerne l'affichage d'une image ou d'une séquence d'images sur plusieurs écrans d'affichage juxtaposés, chaque écran d'affichage étant piloté par une chaîne de traitement vidéo indépendante.

Elle s'applique notamment, mais non exclusivement, à l'affichage d'images telles que des images vidéo sur un grand écran constitué de plusieurs écrans juxtaposés et contigus, formant un mur d'écrans. Dans un tel système, chaque afficheur est piloté par une chaîne vidéo distincte de manière à afficher une partie respective des images vidéo. Chaque afficheur peut être constitué d'un système de rétroprojection, de vidéoprojection, ou encore d'un écran solide tel qu'un écran à tube cathodique, à plasma ou à cristaux liquides.

Elle s'applique en particulier aux systèmes de visioconférence mettant en communication audiovisuelle bidirectionnelle deux sites distants, via un réseau de transmission haut débit, chaque site distant étant équipé de ce que l'on appelle un "mur de téléprésence" constitué de plusieurs écrans juxtaposés et contigus. Dans un tel système, chaque afficheur est piloté par une chaîne vidéo distincte reliée à une caméra installée sur l'autre site distant.

Pour que les images affichées par les différents écrans formant le "mur de téléprésence" ne fassent pas apparaître de discontinuités résultant du fait qu'elles sont affichées par plusieurs écrans, il est nécessaire que le rendu colorimétrique de chaque écran soit uniforme d'un écran à l'autre.

Actuellement, le réglage colorimétrique de chaque afficheur est effectué manuellement Il s'avère que cette solution ne donne pas entière satisfaction du fait notamment que la précision obtenue par des réglages manuels est insuffisante pour supprimer tout écart perceptible de rendu colorimétrique entre deux écrans adjacents. L'oeil de l'opérateur étant le seul instrument de mesure employé, l'appréciation des écarts de rendu colorimétrique reste très subjective.

Le document WO 00/18139 A divulgue un procédé automatique de réglage où chaque afficheur est réglé séparément par l'utilisation d'une fonction de transformation.

Il existe des outils d'observation et de mesure de surfaces d'affichage, comme des sondes colorimétriques. Toutefois, ce type d'outil n'a jamais été couplé à des systèmes de réglage d'afficheur ou à des chaînes de traitement vidéo.

En outre, l'opérateur reste tributaire des limites de capacité de réglage des différentes chaînes vidéo (pas d'incrémentation de réglage trop important, inertie de réglage). Toutes ces limitations font que réglage manuel reste très approximatif.
Par ailleurs, quelle que soit la technique d'affichage employée, le rendu colorimétrique d'un écran est sujet à des variations lentes, en raison notamment du vieillissement de certains organes de l'afficheur ou de la chaîne vidéo, ce qui implique d'effectuer de tels réglages régulièrement. Comme ces réglages nécessitent le déplacement d'un opérateur, il arrive fréquemment qu'ils ne soient pas effectués au moment où ils sont nécessaires.

La présente invention a pour but de supprimer ces inconvénients, sans toutefois remplacer les réglages manuels qui restent nécessaires pour corriger des écarts importants de rendu colorimétrique entre des écrans adjacents.
Cet objectif est atteint par la prévision d'un procédé d'uniformisation du rendu colorimétrique d'une surface d'affichage comprenant au moins deux écrans d'affichage adjacents, pilotés respectivement par des chaînes de traitement vidéo dans lesquelles transitent des flux vidéo respectifs. Selon l'invention, ce procédé comprend, pour chaque paire d'écrans adjacents des écrans d'affichage, les étapes consistant à :
- prélever périodiquement par un organe de calcul des données d'image de deux zones d'écran situées respectivement sur les deux écrans de la paire d'écrans adjacents,
- analyser par l'organe de calcul les données d'image prélevées à chaque période pour déterminer un écart de rendu colorimétrique entre les deux zones d'écran,
- déterminer par un organe de correction relié à l'organe de calcul, un traitement à appliquer au flux vidéo de l'une des deux chaînes vidéo pilotant respectivement les deux écrans de la paire d'écrans adjacents, en appliquant une loi de correction prédéterminée à l'écart de rendu colorimétrique, et
- appliquer le traitement à ladite chaîne vidéo par l'organe de correction, en vue d'uniformiser le rendu colorimétrique de la surface d'affichage.

Avantageusement, les données d'image prélevées sont obtenues à l'aide d'une caméra disposée à cheval sur les deux écrans de chaque paire d'écrans adjacents.

Selon une particularité de l'invention, l'analyse des données d'image prélevées comprend les étapes consistant à :
- considérer dans les données d'image prélevées deux zones de mesure situées symétriquement de part et d'autre d'une ligne de séparation des deux écrans de chaque paire d'écrans adjacents,
- déterminer des composantes couleurs de chaque zone de mesure, et
- déterminer des écarts de composantes couleurs en comparant chaque composante couleur moyenne d'une des deux zones de mesure avec la composante couleur moyenne correspondante de l'autre zone de mesure, les écarts de composantes couleur constituant l'écart de rendu colorimétrique.

De préférence, la détermination des composantes couleur moyennes de chaque zone de mesure est effectuée à partir des composantes couleur de chaque pixel de la zone de mesure.

Egalement de préférence, le prélèvement de données d'image est effectué avec une périodicité de l'ordre de quelques minutes à quelques dizaines de minutes.

Selon une autre particularité de l'invention, la loi de correction appliquée par l'organe de correction à l'écart de rendu colorimétrique est une loi de type matriciel.

Alternativement, la loi de correction appliquée par l'organe de correction à l'écart de rendu colorimétrique est une loi de type itérative avec critère de convergence.

Selon encore une autre particularité, le procédé selon l'invention comprend une étape de comparaison de l'écart de rendu colorimétrique à un seuil prédéfini, et si l'écart de rendu colorimétrique est supérieur au seuil, aucun traitement de correction n'est appliqué au flux vidéo de l'une des deux chaînes vidéo pilotant respectivement les deux écrans de la paire d'écrans adjacents.

Avantageusement, si l'écart de rendu colorimétrique est supérieur au seuil pendant plusieurs périodes consécutives, il comprend l'émission d'un signal d'alerte indiquant qu'un réglage manuel des chaînes de traitement vidéo est nécessaire pour uniformiser le rendu colorimétrique de la surface d'affichage.

Selon encore une autre particularité, le procédé selon l'invention comprend des étapes de conservation d'un historique des écarts colorimétriques déterminés pour chaque paire d'écrans d'affichage, d'analyse de l'historique pour établir une loi de dérives colorimétriques pour chaque écran d'affichage.

L'invention concerne également un système d'uniformisation du rendu colorimétrique d'une surface d'affichage comprenant au moins deux écrans d'affichage adjacents, pilotés respectivement par des chaînes de traitement vidéo dans lesquelles transitent des flux vidéo respectifs. Selon l'invention, ce système comprend une chaîne de correction de rendu colorimétrique d'écran d'affichage par zone de séparation entre deux écrans adjacents, chaque chaîne de correction comprenant :
- un capteur disposé à cheval sur la zone de séparation entre les deux écrans, de manière à fournir des données d'image des images affichées sur les deux écrans,
- un organe de calcul connecté au capteur et conçu pour prélever périodiquement des données d'image parmi les données d'image fournies par le capteur, pour analyser les données d'image prélevées et déduire de cette analyse un écart de rendu colorimétrique entre les deux écrans,
- un organe de correction relié à l'organe de calcul et conçu pour déterminer un traitement à appliquer au flux vidéo de l'une des deux chaînes vidéo pilotant respectivement les deux écrans, en appliquant une loi de correction prédéterminée à l'écart de rendu colorimétrique, et pour appliquer ce traitement au flux vidéo, en vue d'uniformiser le rendu colorimétrique de la surface d'affichage.

Avantageusement, le capteur est une caméra vidéo.

Un mode de réalisation préféré de l'invention sera décrit ci-après, à titre d'exemple non limitatif, avec référence aux dessins annexés dans lesquels
La figure 1 représente un système d'affichage d'images vidéo à deux afficheurs, équipé du système selon l'invention ;
La figure 2 montre une image prise par le capteur du système représenté sur la figure 1, dont le rendu colorimétrique est analysé conformément au procédé selon l'invention ;
La figure 3 illustre sous la forme d'un organigramme le procédé selon l'invention ;
La figure 4 représente un écran d'affichage à n afficheurs, équipé du système selon l'invention.

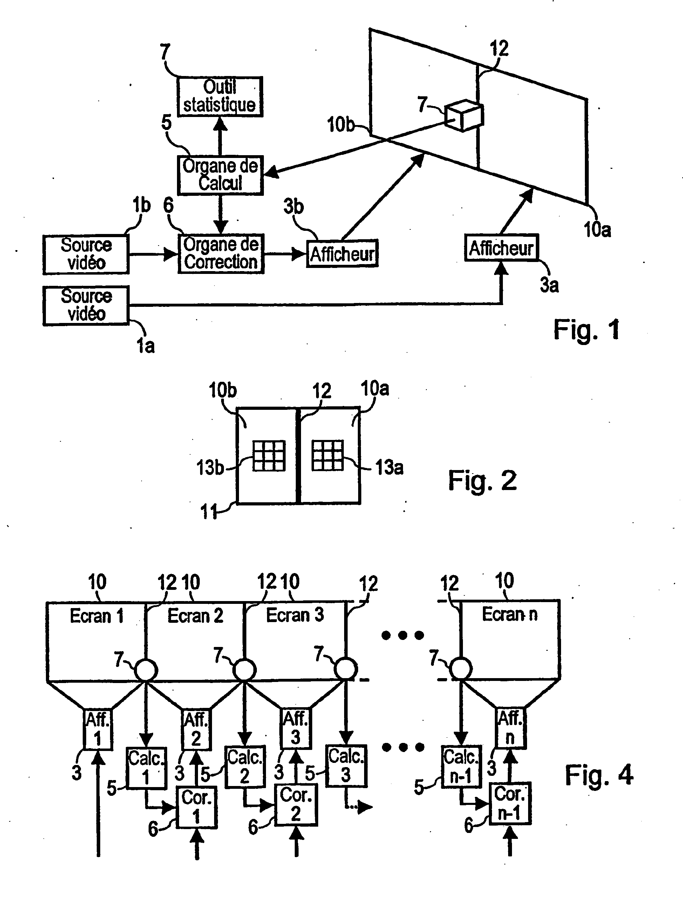

La figure 1 représente un système d'affichage d'images vidéo à deux écrans 10a, 10b contigus.
Ce système comprend deux chaînes vidéo comprenant chacune une source d'images vidéo 1a, 1b reliée à un afficheur 3a, 3b, chaque afficheur pilotant respectivement un des écrans d'affichage 10a, 10b. L'ensemble constitué d'un afficheur 3a, 3b et d'un écran d'affichage 10a, 10b représente en fait un système de rétroprojection, un système de vidéoprojection, ou encore un écran solide tel qu'un écran à tube cathodique, à plasma ou à cristaux liquides.

Selon l'invention, on dispose à cheval sur la zone de séparation 12 des deux écrans 10a, 10b, un capteur 7 qui transmet des mesures colorimétriques à un organe de calcul 5 conçu pour déterminer un écart de rendu colorimétrique entre les deux écrans 10a, 10b. L'organe de calcul est relié à un organe de correction 6 interposé dans l'une des chaînes vidéo et conçu pour corriger les composantes couleur du flux vidéo transitant dans la chaîne, en fonction de l'écart de rendu colorimétrique déterminé par l'organe de calcul 5. Dans l'exemple illustré par la figure 1, l'organe de correction 6 est disposé entre la source vidéo 1b et l'afficheur 3b de manière à modifier les paramètres des composantes couleur du flux vidéo provenant de la source 1b, avant de les appliquer à l'afficheur 3b.

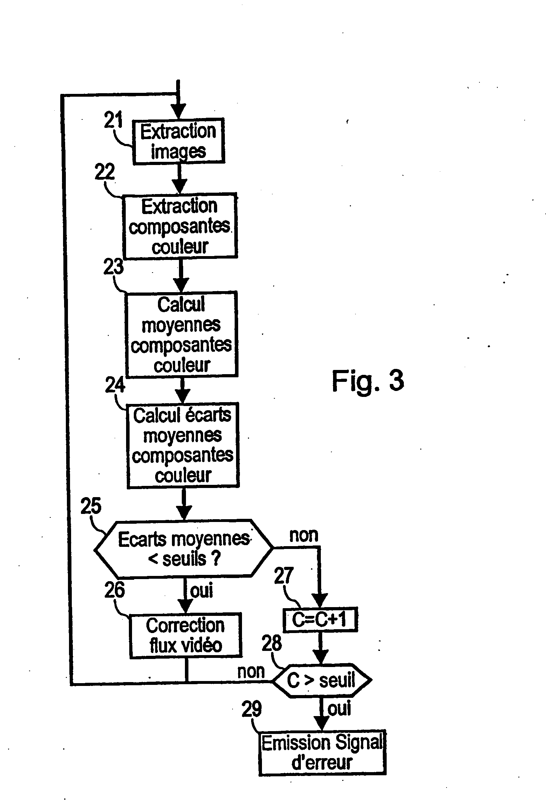

Le capteur 7 est par exemple constitué par une caméra vidéo qui transmet à l'organe de calcul 5 un flux vidéo, ou périodiquement, une image numérique.
Conformément au procédé selon l'invention illustré sur la figure 3, l'organe de calcul 5 prélève 21 à intervalles réguliers une ou plusieurs images 11 du flux vidéo. Une telle image est illustrée sur la figure 2. Chacune de ces images représente une partie de la zone de séparation entre les deux écrans 10a, 10b contigus, et une partie des images affichées respectivement par ces derniers.

L'organe de calcul analyse les images prélevées en considérant deux zones de mesure 13a, 13b réparties symétriquement de part et d'autre de la zone de séparation 12 entre les deux écrans. Les deux zones de mesure 13a, 13b sont par exemple des carrés de p x p pixels, dans l'exemple de la figure 2, 3 x 3 pixels.

La dérive colorimétrique des afficheurs étant en général un phénomène à évolution relativement lente, le traitement effectué par l'organe de calcul 5 n'a pas besoin d'être effectué d'une manière continue. Un traitement de correction effectué selon une périodicité de quelques minutes à quelques dizaines de minutes est suffisant.

L'analyse effectuée par l'organe de calcul 5 consiste à déterminer 22 pour chaque pixel de chaque zone 13a, 13b les valeurs respectives des composantes couleur R (rouge), V (vert), B (bleu), selon les unités utilisées dans le domaine informatique. Ces valeurs sont par exemple déterminées sous la forme de valeurs binaires sur 8 bits.

Les valeurs des composantes couleur ainsi déterminées sont ensuite pondérées et moyennées 23 sur tous les pixels de chaque zone 13a, 13b, pour obtenir pour chacune de ces zones des composantes couleur globales, Ca_{R}, Ca_{V}, Ca_{B} et Cb_{R}, Cb_{V}, Cb_{B}. L'organe de calcul peut en outre calculer une moyenne de ces valeurs sur plusieurs images prélevées.
Les composantes globales Ca_{R}, Ca_{V}, Ca_{B} et Cb_{R}, Cb_{V}, Cb_{B} obtenues pour chacune des zones 13a et 13b sont ensuite comparées 24 deux à deux pour déterminer un écart colorimétrique entre les deux écrans, cet écart étant constitué d'une valeur d'écart pour chaque composante couleur. La valeur de cet écart est par exemple de la forme (ΔC_{R}, ΔC_{V}, ΔC_{B}) = (Cb_{R}-Ca_{R}, Ca_{V}-Cb_{V}, Ca_{B}-Cb_{B}).

La valeur de cet écart colorimétrique est transmise à l'organe de correction 6 qui à l'aide d'une loi de correction f(ΔC_{R}, ΔC_{V}, ΔC_{B}) déduit 26 le traitement de correction à appliquer au flux vidéo à corriger, c'est-à-dire le flux vidéo issu de la source 1b dans l'exemple de la figure 1, puis il applique ce traitement.
La loi de correction f(ΔC_{R}, ΔC_{V}, ΔC_{B}) peut être de type matriciel ou itératif avec critère de convergence.

Une loi de correction de type matriciel consiste à appliquer l'écart de rendu colorimétrique calculé (ΔC_{R}, ΔC_{V}, ΔC_{B}) ou une fonction de celui-ci à chaque pixel des images du flux vidéo à corriger.

Une loi de correction de type itératif consiste à appliquer l'écart de rendu colorimétrique (ΔC_{R}, ΔC_{V}, ΔC_{B}) à chaque pixel des images du flux vidéo à corriger, et à consécutivement remesurer le nouvel écart (ΔC_{R}', ΔC_{V}', ΔC_{B}'), à vérifier qu'il est bien inférieur à l'écart précédemment mesuré, et à appliquer ce nouvel écart à l'ensemble des pixels. Le critère de convergence est donc le suivant : ΔC_{R}'<ΔC_{R}, ΔC_{V}'<ΔC_{V}, ΔC_{B}'<ΔC_{B}. On répète ce traitement jusqu'à obtenir un écart de rendu colorimétrique inférieur à un seuil prédéfini qui peut être avantageusement le seuil de perception de l'oeil humain. Si le critère de convergence n'est pas satisfait, cela signifie que la méthode itérative n'est pas appropriée et on applique alors la méthode de correction matricielle.

Bien entendu, ces traitements peuvent être effectués dans d'autres systèmes d'unités, tels que le système d'unités vidéo YUV ou encore le système d'unités XYZ utilisées pour l'oeil humain. On peut avantageusement prévoir de convertir à l'aide de matrices de transformation connues, les valeurs des composantes en RVB dans d'autres systèmes d'unités qui sont mieux adaptés à la chaîne vidéo à corriger.

De préférence, la valeur des écarts mesurés sur chaque composante couleur est comparée 25 à une valeur de seuil respective prédéterminée, de manière à pouvoir déterminer si ces écarts sont acceptables par l'organe de correction 6, c'est-à-dire s'ils ne sont pas trop importants pour pouvoir être corrigés par ce dernier.
Si ces écarts sont incompatibles avec les possibilités de correction dont dispose l'organe de correction 6, l'organe de correction n'applique aucune correction au flux vidéo issu de la source 1b. Si ces écarts restent inacceptables pendant plusieurs périodes de mesure consécutives, le système émet 29 un signal d'alerte pour indiquer qu'une intervention manuelle sur le réglage des afficheurs ou les chaînes vidéo est nécessaire. Le système peut à cet effet incrémenter 27 un compteur C et lorsque la valeur de ce compteur dépasse 28 un certain seuil, le système émet le signal d'alerte. Bien entendu, si une correction est effectuée, la valeur du compteur C est remise à zéro.

Cette disposition permet de ne pas prendre en compte une différence de couleur entre les images affichées sur les deux écrans 10a, 10b, résultant du passage d'un objet devant la ou les caméras et lorsqu'un bord de l'objet se trouve affiché entre les deux zones de mesure 13a, 13b.

Le système décrit en référence à la figure 1 peut être généraliste à n écrans d'affichage, comme représenté sur la figure 4. Sur cette figure, le système d'affichage comprend n écrans d'affichage 10 (n étant un nombre entier supérieur à 2), chaque écran étant piloté par un afficheur respectif 3. Le système de correction selon l'invention comprend une chaîne de mesure et de correction colorimétrique par ligne de séparation 12 entre deux écrans adjacents. Chaque chaîne de mesure et de correction de rang i (i étant un nombre entier compris entre 1 et n-1) comprend un capteur 7 positionné en regard d'une ligne de séparation 12 entre deux écrans 10 adjacents, de rangs respectifs i et i+1, ce capteur étant couplé à un organe de calcul 5 de dérive colorimétrique de rang i, ce dernier étant connecté à un organe de correction 6 de rang i, interposé dans la chaîne vidéo de commande de l'afficheur 3 de rang i+1. Ce système comprend donc n-1 chaînes de mesure et de correction colorimétrique, les afficheurs 3 de rang 2 à n étant réglés de proche en proche à partir de l'écrin 10 de rang 1.

On peut prévoir de conserver un historique des écarts calculés entre les deux zones de mesure, et d'analyser cet historique avec un outil statistique 7 (figure 1), de manière à établir des lois de dérives colorimétriques en fonction des types et des modèles d'afficheur. Ces lois de dérives colorimétriques permettent d'anticiper, et donc de planifier les interventions d'opérateurs pour procéder aux réglages manuels.

## Revendications

1. Procédé d'uniformisation du rendu colorimétrique d'une surface d'affichage comprenant au moins deux écrans d'affichage (10a, 10b) adjacents, pilotés respectivement par des chaînes de traitement vidéo dans lesquelles transitent des flux vidéo respectifs, **caractérisé en ce qu'**il comprend, pour chaque paire d'écrans (10a, 10b) adjacents des écrans d'affichage, les étapes consistant à :
- prélever (21) périodiquement par un organe de calcul (5), parmi des données d'image fournies par un capteur, des données d'image de deux zones (13a, 13b) d'écran situées respectivement sur les deux écrans (10a, 10b) de la paire d'écrans adjacents,
- analyser (22, 23, 24) par l'organe de calcul (5) les données d'image prélevées à chaque période pour déterminer un écart de rendu colorimétrique entre les deux zones d'écran,
- déterminer par un organe de correction (6) relié à l'organe de calcul, en appliquant une loi de correction prédéterminée à l'écart de rendu colorimétrique, un traitement à appliquer au flux vidéo de l'une des deux chaînes vidéo pilotant respectivement les deux écrans de la paire d'écrans adjacents, et
- appliquer (26) le traitement à ladite chaîne vidéo par l'organe de correction, en vue d'uniformiser le rendu colorimétrique de la surface d'affichage.

2. Procédé selon la revendication 1, **caractérisé en ce que** le capteur (7) est disposé à cheval sur les deux écrans (10a, 10b) de chaque paire d'écrans adjacents.

3. Procédé selon la revendication 1 ou 2, **caractérisé en ce que** l'analyse des données d'image prélevées comprend les étapes consistant à :
- considérer dans les données d'image prélevées deux zones (13a, 13b) de mesure situées symétriquement de part et d'autre d'une ligne de séparation (12) des deux écrans (10a, 10b) de chaque paire d'écrans adjacents,
- déterminer (22,23) des composantes couleurs moyennes de chaque zone de mesure, et
- déterminer (24) des écarts de composantes couleurs en comparant chaque composante couleur moyenne d'une des deux zones de mesure avec la composante couleur moyenne correspondante de l'autre zone de mesure, les écarts de composantes couleur constituant l'écart de rendu colorimétrique.

4. Procédé selon la revendication 3, **caractérisé en ce que** la détermination (23) des composantes couleur moyennes de chaque zone de mesure (13a, 13b) est effectuée à partir des composantes couleur de chaque pixel de la zone de mesure.

5. Procédé selon l'une des revendications 1 à 4, **caractérisé en ce que** le prélèvement (21) de données d'image est effectué avec une périodicité de l'ordre de quelques minutes à quelques dizaines de minutes.

6. Procédé selon l'une des revendications 1 à 5, **caractérisé en ce que** la loi de correction appliquée par l'organe de correction (6) à l'écart de rendu colorimétrique est une loi de type matriciel.

7. Procédé selon l'une des revendications 1 à 5, **caractérisé en ce que** la loi de correction appliquée par l'organe de correction (6) à l'écart de rendu colorimétrique est une loi de type itérative avec critère de convergence.

8. Procédé selon l'une des revendications 1 à 7, **caractérisé en ce qu'**il comprend une étape (25) de comparaison de l'écart de rendu colorimétrique à un seuil prédéfini, et si l'écart de rendu colorimétrique est supérieur au seuil, aucun traitement de correction n'est appliqué au flux vidéo de l'une des deux chaînes vidéo pilotant respectivement les deux écrans (10a, 10b) de la paire d'écrans adjacents.

9. Procédé selon la revendication 8, **caractérisé en ce que** si l'écart de rendu colorimétrique est supérieur au seuil pendant plusieurs périodes consécutives, il comprend l'émission (29) d'un signal d'alerte indiquant qu'un réglage manuel des chaînes de traitement vidéo est nécessaire pour uniformiser le rendu colorimétrique de la surface d'affichage.

10. Procédé selon l'une des revendications 1 à 9, **caractérisé en ce qu'**il comprend des étapes de conservation d'un historique des écarts colorimétriques déterminés pour chaque paire d'écrans d'affichage, d'analyse de l'historique pour établir une loi de dérives colorimétriques pour chaque écran d'affichage.

11. Système d'uniformisation du rendu colorimétrique d'une surface d'affichage comprenant au moins deux écrans d'affichage (10a, 10b) adjacents, pilotés respectivement par des chaînes de traitement vidéo dans lesquelles transitent des flux vidéo respectifs,
**caractérisé en ce qu'**il comprend une chaîne de correction de rendu colorimétrique d'écran d'affichage par zone de séparation (12) entre deux écrans adjacents (10a, 10b), chaque chaîne de correction comprenant :
- un capteur (7) disposé à cheval sur la zone de séparation entre les deux écrans adjacents, de manière à fournir des données d'image des images affichées sur les deux écrans,
- un organe de calcul (5) connecté au capteur et conçu pour prélever périodiquement des données d'image parmi les données d'image fournies par le capteur, pour analyser les données d'image prélevées et déduire de cette analyse un écart de rendu colorimétrique entre les deux écrans,
- un organe de correction (6) relié à l'organe de calcul et conçu pour déterminer, en appliquant une loi de correction prédéterminée à l'écart de rendu colorimétrique, un traitement à appliquer au flux vidéo de l'une des deux chaînes vidéo pilotant respectivement les deux écrans (10a,10b) et pour appliquer ce traitement au flux vidéo, en vue d'uniformiser le rendu colorimétrique de la surface d'affichage.

12. Système selon la revendication 11, **caractérisé en ce que** le capteur (7) est une caméra vidéo.

## Claims

1. Method for making uniform the colorimetric rendering of a display surface comprising at least two adjacent display screens (10a, 10b), driven respectively by video processing channels through which respective video streams pass,
**characterized in that** it comprises, for each pair of adjacent screens (10a, 10b) of the display screens, the steps consisting in:
- periodically sampling (21) by a calculation device (5) from among image data provided by a sensor the image data of two screen areas (13a, 13b) situated respectively on the two screens (10a, 10b) of the pair of adjacent screens,
- analyzing (22, 23, 24) by the calculation device (5) the image data sampled at each period so as to determine a colorimetric rendering discrepancy between the two screen areas,
- determining, by applying by a correction device (6) linked to the calculation device a predetermined correction law to the colorimetric rendering discrepancy, a processing to be applied to the video stream of one of the two video channels driving respectively the two screens of the pair of adjacent screens, and
- applying (26) the processing to the said video channel by the correction device, with a view to making the colorimetric rendering of the display surface uniform.

2. Method according to Claim 1,
**characterized in that** the sensor (7) is disposed straddling the two screens (10a, 10b) of each pair of adjacent screens.

3. Method according to Claim 1 or 2,
**characterized in that** the analysis of the sampled image data comprises the steps consisting in:
- considering in the sampled image data two measurement areas (13a, 13b) situated symmetrically on either side of a line of separation (12) of the two screens (10a, 10b) of each pair of adjacent screens,
- determining (22, 23) mean colour components of each measurement area, and
- determining (24) colour component discrepancies by comparing each mean colour component of one of the two measurement areas with the corresponding mean colour component of the other measurement area, the colour component discrepancies constituting the colorimetric rendering discrepancy.

4. Method according to Claim 3,
**characterized in that** the determination (23) of the mean colour components of each measurement area (13a, 13b) is performed on the basis of the colour components of each pixel of the measurement area.

5. Method according to one of Claims 1 to 4,
**characterized in that** the image data sampling (21) is performed with a periodicity of the order of a few minutes to a few tens of minutes.

6. Method according to one of Claims 1 to 5,
**characterized in that** the correction law applied by the correction device (6) to the colorimetric rendering discrepancy is a law of matrix type.

7. Method according to one of Claims 1 to 5,
**characterized in that** the correction law applied by the correction device (6) to the colorimetric rendering discrepancy is a law of iterative type with convergence criterion.

8. Method according to one of Claims 1 to 7,
**characterized in that** it comprises a step (25) of comparing the colorimetric rendering discrepancy with a predefined threshold, and if the colorimetric rendering discrepancy is greater than the threshold, no correction processing is applied to the video stream of one of the two video channels driving respectively the two screens (10a, 10b) of the pair of adjacent screens.

9. Method according to Claim 8,
**characterized in that** if the colorimetric rendering discrepancy is greater than the threshold for several consecutive periods, it comprises the emission (29) of an alert signal indicating that a manual adjustment of the video processing channels is necessary in order to make the colorimetric rendering of the display surface uniform.

10. Method according to one of Claims 1 to 9,
**characterized in that** it comprises steps of preserving a log of the colorimetric discrepancies determined for each pair of display screens, of analysing the log so as to establish a law of colorimetric drifts for each display screen.

11. System for making uniform the colorimetric rendering of a display surface comprising at least two adjacent display screens (10a, 10b), driven respectively by video processing channels through which there travel respective video streams,
**characterized in that** it comprises a display screen colorimetric-rendering-correction channel per area of separation (12) between two adjacent screens (10a, 10b), each correction channel comprising:
- a sensor (7) disposed straddling the area of separation between the two adjacent screens, so as to provide image data of the images displayed on the two screens,
- a calculation device (5) connected to the sensor and designed to periodically sample image data from among the image data provided by the sensor, to analyse the image data sampled and deduce from this analysis a colorimetric rendering discrepancy between the two screens,
- a correction device (6) linked to the calculation device and designed to determine, by applying a predetermined correction law to the colorimetric rendering discrepancy, a processing to be applied to the video stream of one of the two video channels driving respectively the two screens (10a, 10b), and to apply this processing to the video stream, with a view to making the colorimetric rendering of the display surface uniform.

12. System according to Claim 11,
**characterized in that** the sensor (7) is a video camera.

## Patentansprüche

1. Verfahren zur Vereinheitlichung der Farbwiedergabe einer Anzeigefläche, die mindestens zwei benachbarte Anzeigebildschirme (10a, 10b) aufweist, die je von Videoverarbeitungsketten gesteuert werden, durch die Videoflüsse gehen,
**dadurch gekennzeichnet, dass** es für jedes Paar von benachbarten Bildschirmen (10a, 10b) der Anzeigebildschirme die Schritte aufweist, die darin bestehen:
- periodisch durch ein Rechenorgan (5) aus Bilddaten, die von einem Sensor geliefert werden, Bilddaten aus zwei Bildschirmzonen (13a, 13b) zu entnehmen (21), die sich auf den zwei Bildschirmen (10a, 10b) des Paars von benachbarten Bildschirmen befinden,
- durch das Rechenorgan (5) die in jeder Periode entnommenen Bilddaten zu analysieren (22, 23, 24), um eine Farbwiedergabe-Abweichung zwischen den zwei Bildschirmzonen zu bestimmen,
- durch ein Korrekturorgan (6), das mit dem Rechenorgan verbunden ist, bei Anwendung eines vorbestimmten Korrekturgesetzes an die Farbwiedergabe-Abweichung eine an den Videofluss einer der zwei Videoketten anzuwendende Verarbeitung zu bestimmen, die die zwei Bildschirme des Paars von benachbarten Bildschirmen steuern , und
- die Verarbeitung an die Videokette durch das Korrekturorgan anzuwenden (26), um die Farbwiedergabe der Anzeigefläche zu vereinheitlichen.

2. Verfahren nach Anspruch 1, **dadurch gekennzeichnet, dass** der Sensor (7) zu beiden Seiten überlappend auf den beiden Bildschirmen (10a, 10b) jedes Paars von benachbarten Bildschirmen angeordnet ist.

3. Verfahren nach Anspruch 1 oder 2, **dadurch gekennzeichnet, dass** die Analyse der entnommenen Bilddaten die Schritte aufweist, die darin bestehen:
- in den entnommenen Bilddaten zwei Messzonen (13a, 13b) zu betrachten, die sich symmetrisch zu beiden Seiten einer Trennlinie (12) der zwei Bildschirme (10a, 10b) jedes Paars von benachbarten Bildschirmen befinden,
- mittlere Farbkomponenten jeder Messzone zu bestimmen (22, 23), und
- Abweichungen von Farbkomponenten zu bestimmen (24), indem jede mittlere Farbkomponente einer der zwei Messzonen mit der entsprechenden mittleren Farbkomponente der anderen Messzone verglichen wird, wobei die Abweichungen von Farbkomponenten die Farbwiedergabe-Abweichung darstellen.

4. Verfahren nach Anspruch 3, **dadurch gekennzeichnet, dass** die Bestimmung (23) der mittleren Farbkomponenten jeder Messzone (13a, 13b) ausgehend von den Farbkomponenten jedes Pixels der Messzone durchgeführt wird.

5. Verfahren nach einem der Ansprüche 1 bis 4,
**dadurch gekennzeichnet, dass** die Entnahme (21) von Bilddaten mit einer Periodizität in der Größenordnung von einigen Minuten bis zu einigen zehn Minuten durchgeführt wird.

6. Verfahren nach einem der Ansprüche 1 bis 5,
**dadurch gekennzeichnet, dass** das vom Korrekturorgan (6) an die Farbwiedergabe-Abweichung angewendete Korrekturgesetz ein Gesetz vom Matrixtyp ist.

7. Verfahren nach einem der Ansprüche 1 bis 5,
**dadurch gekennzeichnet, dass** das vom Korrekturorgan (6) an die Farbwiedergabe-Abweichung angewendete Korrekturgesetz ein Gesetz vom iterativen Typ mit Konvergenzkriterium ist.

8. Verfahren nach einem der Ansprüche 1 bis 7,
**dadurch gekennzeichnet, dass** es einen Schritt (25) des Vergleichs der Farbwiedergabe-Abweichung mit einem vordefinierten Schwellwert aufweist, und wenn die Farbwiedergabe-Abweichung über diesem Schwellwert liegt, keine Korrekturverarbeitung an den Videofluss einer der zwei Videoketten angewendet wird, die die zwei Bildschirme (10a, 10b) des Paars von benachbarten Bildschirmen steuern.

9. Verfahren nach Anspruch 8, **dadurch gekennzeichnet, dass** es, wenn die Farbwiedergabe-Abweichung während mehrerer aufeinanderfolgender Perioden über dem Schwellwert liegt, das Senden (29) eines Warnsignals aufweist, das anzeigt, dass eine manuelle Regelung der Videoverarbeitungsketten notwendig ist, um die Farbwiedergabe der Anzeigefläche zu vereinheitlichen.

10. Verfahren nach einem der Ansprüche 1 bis 9,
**dadurch gekennzeichnet, dass** es Schritte zur Erhaltung eines Verlaufs der Farbabweichungen, die für jedes Paar von Anzeigebildschirmen bestimmt werden, und einer Analyse des Verlaufs aufweist, um ein Gesetz von Farbdriften für jeden Anzeigebildschirm zu erstellen.

11. System zur Vereinheitlichung der Farbwiedergabe einer Anzeigefläche, die mindestens zwei benachbarte Anzeigebildschirme (10a, 10b) aufweist, die von Videoverarbeitungsketten gesteuert werden, durch die Videoflüsse gehen,
**dadurch gekennzeichnet, dass** es eine Kette zur Korrektur der Farbwiedergabe eines Anzeigebildschirms durch Trennzone (12) zwischen zwei benachbarten Bildschirmen (10a, 10b) aufweist, wobei jede Korrekturkette aufweist:
- einen Sensor (7), der zu beiden Seiten überlappend auf der Trennzone zwischen den zwei benachbarten Bildschirmen angeordnet ist, um Bilddaten der auf den zwei Bildschirmen angezeigten Bilder zu liefern,
- ein Rechenorgan (5), das mit dem Sensor verbunden und konzipiert ist, um periodisch Bilddaten aus den von dem Sensor gelieferten Bilddaten zu entnehmen, um die entnommenen Bilddaten zu analysieren und aus dieser Analyse eine Farbwiedergabe-Abweichung zwischen den zwei Bildschirmen abzuleiten,
- ein Korrekturorgan (6), das mit dem Rechenorgan verbunden und konzipiert ist, um bei Anwendung eines vorbestimmten Korrekturgesetzes an die Farbwiedergabe-Abweichung eine an den Videofluss einer der zwei Videoketten anzuwendende Verarbeitung zu bestimmen, die die zwei Bildschirme (10a, 10b) steuern, und um diese Verarbeitung an den Videofluss anzuwenden, um die Farbwiedergabe der Anzeigefläche zu vereinheitlichen.

12. System nach Anspruch 11, **dadurch gekennzeichnet, dass** der Sensors (7) eine Videokamera ist.
